# EUROPÄISCHE PATENTSCHRIFT

(11) **EP 0 521 176 B1**
(45) Veröffentlichungstag und Bekanntmachung des Hinweises auf die Patenterteilung: **14.04.1993**
(21) Anmeldenummer: 91110766.2
(22) Anmeldetag: 28.06.1991
(51) Int. Cl.: G01D 3/04

(54) **Schaltungsanordnung zur Temperaturkompensation der Spulengüte**
Circuit for temperature compensation of coil quality factor
Circuit de compensation à temperature pour le facteur de qualité d'un bobine

(43) Veröffentlichungstag der Anmeldung: 07.01.1993
(73) Patentinhaber: SIEMENS AKTIENGESELLSCHAFT, 80333 München (DE)
(72) Erfinder: Laubmann, Robert, W-8460 Schwandorf (DE)

(56) Entgegenhaltungen:
- EP-A- 0 070 796
- DE-A- 1 589 826
- US-A- 2 158 132
- ELEKTRONIK, Bd. 24, Nr. 1, 1975, München, DE, Seiten 59-60; LUZ UND GRIESE: "Spulen mit temperaturstabiler Güte"

## Beschreibung

Die Erfindung betrifft eine Schaltungsanordnung mit einer ersten Spule mit einer ersten Induktivität und eine erste Güte Q1 aus einem ersten Spulenleiter.

Derartige Schaltungsanordnungen werden zur Herstellung eines induktiven Blindwiderstandes herangezogen, wobei die Temperaturabhängigkeit des ersten ohmschen Widerstands auch eine unerwünschte Temperaturabhängigkeit der Güte dieser Anordnung zur Folge hat. Die Güte stellt das Verhältnis zwischen dem induktiven Widerstand bei einer betrachteten Betriebsfrequenz zu dem ersten ohmschen Widerstand dar. Diese Temperaturabhängigkeit macht sich in vielen Anwendungsfällen als störender Nebeneffekt bemerkbar, dessen Beseitigung oder zumindest Minimierung angestrebt wird. Z.B. hat die Temperaturabhängigkeit zur Folge, daß sich auch die Güte eines Schwingkreises mit der Temperatur ändert, so daß bei gleicher sprungförmiger Anregung des Schwingkreises je nach Temperaturhöhe sich ein völlig unterschiedliches Ausschwingverhalten ergeben kann.

In der Offenlegungsschrift DE-A-1 589 826 wird eine Spulenanordnung mit kleiner Temperaturabhängigkeit der Güte offenbart. Die Spulenanordnung besteht aus zwei magnetisch gekoppelten Spulen, von denen die eine als kurzgeschlossene Wicklung mit einer Induktivität betrieben wird, die nur einer Windung entspricht. Die andere stellt die eigentliche Betriebsspule mit der gewünschten Induktivität und Güte dar, für die im allgemeinen ein hoher Wert (z.B. 100) angestrebt wird. Durch das Zusammenwirken mit der kurzgeschlossenen Spule wird zwar eine geringe Temperaturabhängigkeit der Güte der gesamten Spulenanordnung erreicht, jedoch müssen Opfer an der Gesamtgüte von über 50 % von der Originalgüte (z.B. 100) der Betriebsspule hingenommen werden.

Daher besteht die Aufgabe, eine Schaltungsanordnung mit einer Spuleninduktivität der obengenannten Art zu schaffen, bei der der Temperatureinfluß auf die Güte für einen bestimmten Bereich der Betriebsfrequenz weitgehend kompensiert ist, wobei die Güte der Schaltungsanordnung gegenüber der ersten Güte Q1 nahezu unverändert bleibt. Diese Aufgabe wird erfindungsgemäß dadurch gelöst, daß der ersten Spule eine zweite Spule mit einer zweiten Induktivität und mit einer zweite Güte Q2 aus einem zweiten Spulenleiter seriell hinzugeschaltet wird, wobei die beiden Spulen magnetisch gekoppelt sind und so gewählt sind, daß für einen bestimmten Bereich der Betriebsfrequenz die Temperaturabhängigkeit der Güten Q1 und Q2 derart gegensätzlich verläuft, daß für die erste Spule die Güte Q1 mit Erhöhung der Temperatur sinkt und bei der zweiten Spule die Güte Q2 mit Zunahme der Temperatur steigt. Eine Ausgestaltung der Erfindung ist darin zu sehen, wenn der erste Spulenleiter aus Litze und der zweite Spulenleiter aus Volldraht besteht.

Eine Ausführungsform der Erfindung wird anhand einer Zeichnung im folgenden erläutert.

Es zeigen:
- FIG 1: eine Schaltungsanordnung zweier seriell geschalteter, magnetisch gekoppelter Spulen,
- FIG 2: ein Diagramm mit dem Güteverlauf in Abhängigkeit von der Frequenz für Litze als Spulenleiter mit der Temperatur als Parameter,
- FIG 3: ein Diagramm mit dem Güteverlauf in Abhängigkeit von der Frequenz für Volldraht als Spulenleiter mit der Temperatur als Parameter.

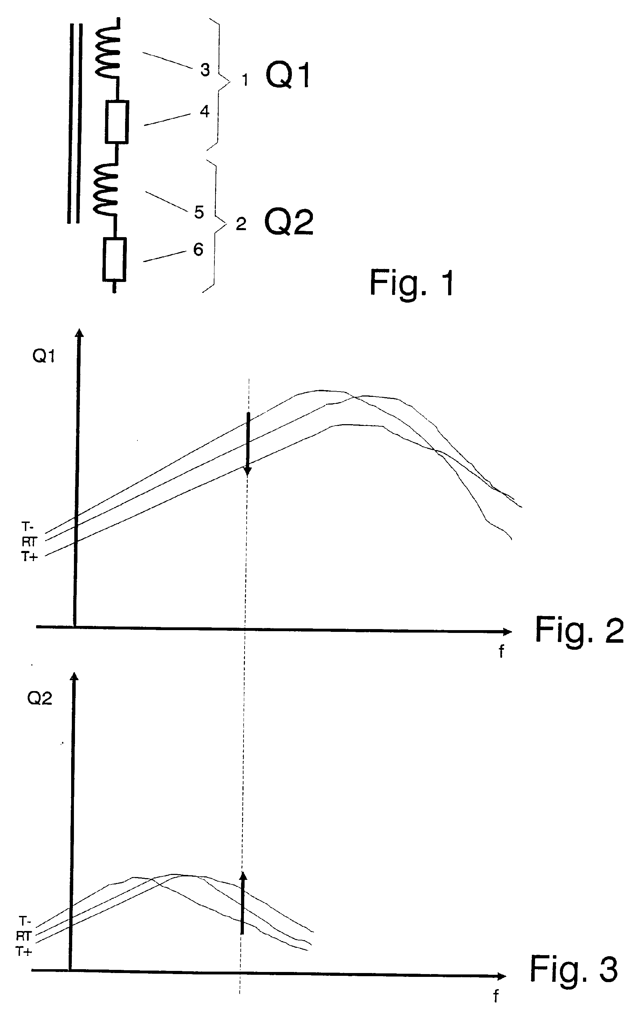

FIG 2 und 3 zeigen, daß die Güte sich mit steigender Frequenz bis zu einem Maximalwert erhöht und dann durch Zunahme der Spulenverluste absinkt. Der Wert des Maximums ist abhängig von der Ausgestaltung der Spule. Ebenso gibt es Spulenkonfigurationen, bei denen sich der Temperaturverlauf oberhalb des Maximums umkehrt.

In FIG 1 ist das Ersatzschaltbild zweier seriell geschalteter Spulen 1, 2 dargestellt, die magnetisch gekoppelt sind. Die erste Spule 1 weist eine erste Induktivität 3 und einen ersten ohmschen Widerstand 4 auf, die zweite Spule 2 hat eine zweite Induktivität 5 und einen zweiten ohmschen Widerstand 6. Für die erste Spule 1 wird Litze als Spulenleiter verwendet, für die sich eine Temperaturabhängigkeit der Güte Q1 in Abhängigkeit von der Frequenz f gemäß FIG 2 ergibt. Hierin sind drei Verläufe für verschiedene Temperaturen T dargestellt, wobei für eine bestimmte Betriebsfrequenz f durch einen Pfeil zur Abszisse hin angedeutet ist, daß mit steigender Temperatur T die Güte Q1 der Litze abnimmt. Entsprechende Verläufe für die Güte Q2 von Volldraht sind in der FIG 3 dargestellt. Hieraus ist zu erkennen, daß für die in FIG 2 bereits hervorgehobene Betriebsfrequenz f sich gemäß FIG 3 für Volldraht eine gegensätzliche Temperaturabhängigkeit der Güte Q2 ergibt. Bei Temperaturzunahme, die hier durch den nach oben gerichteten Pfeil angedeutet ist, wird hier auch die Güte Q2 angehoben. Dies bedeutet, daß der Abfall der Güte Q1 zumindest teilweise durch den gleichzeitigen Anstieg der Güte Q2 bei Serienschaltung einer ersten Spule 1 aus Litze und einer zweiten Spule 2 aus Volldraht kompensiert werden kann. Der gesamte ohmsche Widerstand besteht nun aus der Reihenschaltung aus dem ersten ohmschen Widerstand 4 und dem zweiten ohmschen Widerstand 6. Durch die magnetische Kopplung der beiden Spulen 1, 2 nimmt die Induktivität der gesamten Schaltungsanordnung überproportional zu, während sich der ohmsche Widerstand linear erhöht. Damit läßt sich für die gesamte Schaltungsanordnung aus den beiden in Reihe geschalteten Spulen 1, 2 eine Güte erreichen, die gegenüber der Güte Q1 für die erste Spule 1 nahezu unverändert ist.

## Patentansprüche

1. Schaltungsanordnung mit einer ersten Spule (1) mit einer ersten Induktivität (3) und einer ersten Güte Q1 aus einem ersten Spulenleiter und mit einer seriell zur ersten Spule (1) geschalteten zweiten Spule (2) mit einer zweiten Induktivität (5) und mit einer zweiten Güte Q2 aus einem zweiten Spulenleiter, wobei die beiden Spulen (1, 2) magnetisch gekoppelt sind und so gewählt sind, daß für einen bestimmten Bereich der Betriebsfrequenz f die Temperaturabhängigkeit der Güten Q1 und Q2 für die beiden Spulen (1, 2) derart gegensätzlich verläuft, daß für die erste Spule (1) die erste Güte Q1 mit Erhöhung der Temperatur T sinkt und bei der zweiten Spule (2) die zweite Güte Q2 mit Zunahme der Temperatur T steigt.

2. Schaltungsanordnung nach Anspruch 1, **dadurch gekennzeichnet,** daß der erste Spulenleiter aus Litze und der zweite Spulenleiter aus Volldraht besteht.

## Claims

1. Circuit arrangement with a first coil (1), the first coil (1) having a first inductance (3) and a first quality factor Q1 and consisting of a first coil conductor, and with a second coil (2) serially connected to the first coil (1) and having a second inductance (5) and a second quality factor Q2 and consisting of a second coil conductor, wherein the two coils (1, 2) are magnetically coupled and are selected such that for a certain region of the operational frequency f the temperature dependency of the quality factors Q1 and Q2 for the two coils (1, 2) extends oppositely in such a way that for the first coil (1) the first quality factor Q1 decreases with a rising of the temperature T and with the second coil (2) the second quality factor Q2 increases with increase of the temperature T.

2. Circuit arrangement according to claim 1, characterized in that the first coil conductor consists of litz wire and the second coil conductor consists of solid wire.

## Revendications

1. Montage comportant une première bobine (1) possédant une première inductance (3) et un premier facteur de qualité Q1 fourni par un premier conducteur de bobine, et comportant une seconde bobine (2) branchée en série avec la première bobine (1), possédant une seconde inductance (5) et un second facteur de qualité Q2 fourni par un second conducteur de bobine, les deux bobines (1,2) étant couplées magnétiquement et étant choisies de manière que dans une gamme déterminée de la fréquence de fonctionnement f, les dépendances des facteurs de qualité Q1 et Q2 pour les deux bobines (1,2) vis-à-vis de la température varient en des sens opposés de sorte que pour la première bobine (1), le premier facteur de qualité Q1 diminue lorsque la température T augmente et que dans le cas de la seconde bobine (2), le second facteur de qualité Q2 augmente lorsque la température T augmente.

2. Montage suivant la revendication 1, caractérisé par le fait que le premier conducteur de bobine est constitué par une tresse et que le second conducteur de bobine est constitué par un fil massif.
